# EUROPEAN PATENT APPLICATION

(11) **EP 4 734 499 A1**
(43) Date of publication of application: **29.04.2026**
(21) Application number: 24209146.0
(22) Date of filing: 28.10.2024
(51) Int. Cl.: H04N 1/405, B41M 1/04

(54) **AUTOMATED OBJECT BASED SCREENING**

(71) Applicant: Esko Software BV, 9051 Gent (BE)
(72) Inventor: Morisse, Peter, CH-8105 Regensdorf (CH); Bruce, Robert, CH-8105 Regensdorf (CH)
(74) Representative: Müller-Boré & Partner Patentanwälte PartG mbB

(57) **Abstract**

The type of screening used changes the look/aesthetics of an image. AM based screening looks good in lower color saturated areas of an image. FM based screening looks better in higher color saturated areas of an image. Using only one type of screen leaves imperfections on a part of the image. The method described herein detects and applies the best type of screen for each part of the image in an automized process.

## Description

### FIELD OF THE INVENTION

The present invention relates to printing, more specifically to flexographic printing, and methods, and systems for implementation of such methods, for addressing challenges in a printing image by detecting and applying a suitable type of screen for each part of the image in an automated process.

### BACKGROUND OF THE INVENTION

Printing quality of flexographic printing using digital photopolymer printing plates has been continuously improved over the past decades due to several improvements in different areas of this technology. In addition to increasing the image file resolution and the imager resolution for ablating these files into the Laser Ablative Mask System (LAMS) of the digital polymer printing plates, exposure systems have also been improved, e.g., by replacing fluorescent tube-based systems by light-emitting diode (LED)-based systems that produce higher, constant, and precisely controllable UV output. Also, the printing plates themselves have been improved in terms of polymer formulations. Finally, screening technologies have also made important contributions to this development.

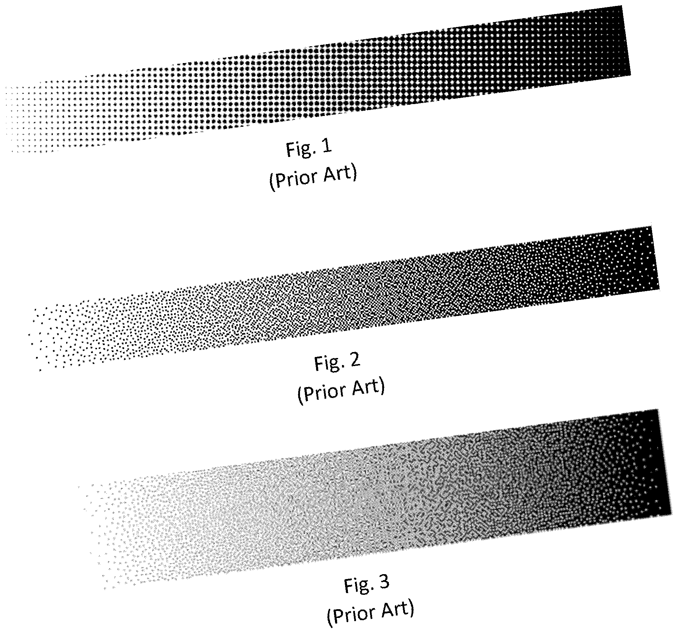

In terms of screenings, different approaches have been used that have advantages and shortcomings. The most common screening concept involves regular screens with fixed printing dot positions and varying dot sizes that correspond to the tonal values of the image, and which are oriented at certain angles that allow combining several so-called process colours on the print substrate, while minimizing artifacts in the printed result. These types of screens are commonly called Amplitude Modulated (AM) screens. An example of an AM screen is depicted in Fig. 1 which shows a Double Circular AM screen.

AM screens are suitable for printing large areas with constant or low tonal gradient values that do not contain many fine details.

Another approach is a Frequency Modulated (FM) screen. These screens have fewer fixed positions but are relatively constant in dot size, with the tonal value being encoded by the number of dots per surface area. An exemplary FM screen is depicted in Fig. 2.

FM screens deliver good results for image areas comprising fine image details while large areas of constant tonal values can sometimes look grainy.

In addition to AM and FM screens, there are many other screen techniques, many of which are mixtures of different screens. Exemplary such screens include the Monet screen for flexo screen, which has variable distances between the printing dots and variable sizes of the printing dots. An exemplary Monet screen is shown in Fig. 3.

Moreover, some screens provide additional microstructures on the tips of the printing dots or surfaces. These microstructures can improve the ink splitting during printing. Such microstructures are mentioned in EP Application 3463919B1 titled METHOD FOR SMOOTHER TONAL RESPONSE IN FLEXOGRAPHIC PRINTING, owned by Applicant Esko Software BV, for example.

Exemplary Screening technologies are described in more detail in the ESKO Imaging Engine 18 User Guide release 01 2021, available at https://docs.esko.com/docs/en-us/imagingengine/18/userguide/pdf/ImagingEngine_18.pdf, for example, the contents of which are incorporated herein in their entirety.

In a standard prepress workflow, creation of a printing plate starts with designing the artwork to be printed. This artwork usually comprises text and linework objects, typically in a vector format. Additionally, the print job artwork may comprise photographic images of real existing objects, such as, for example, a dog, a flower, or any picture that can be taken with a camera. Usually, these image objects are provided in a bitmap format. A PDF format is typically used as a container for these different objects in the image file. In general, PDF files may have overlapping vector data and photographic images or use complex transparency models comprising different types of overlapping objects.

After the artwork has been designed and stored in a data file having a virtual dimension that corresponds to the future printing plate, the data file is separated into different process colours that are later printed one over another to reproduce all colour shadings of the artwork in the data file. In a standard four-colour setup, these process colours are cyan, magenta, yellow, and black (CMYK). More elaborate printing processes may use 5 to 7 process colours (e.g. orange, green) and/or spot colours (e.g. brand-specific colours that match to a specified Pantone^{®} colour, for example).

All objects in the image file are RIPped, i.e., processed with a Raster Image Processor (RIP), with a certain screen type and screen resolution, whereas the different colours are allocated to different screen angles. In other words, each process colour is printed in a different screen angle from all other colours, e.g., to minimize Moiré pattern artefacts in the finished print.

In this standard workflow, all image details on the printing plate are RIPped with the same type of screen, e.g., an AM screen.

As noted above, in some more elaborate printing workflows, certain letters and linework art may be printed using a spot colour.

For example, the letters of the word "Esko" can be printed with solid printing letters without any screening in the Esko brand colour. Printing exactly the targeted colour eliminates the need for creating this colour by a combination of process colours and is less likely to show any printing artefacts, such as Moiré or graininess, for example. This is, of course, at the cost of increased technical effort: an additional print colour and flexographic printing plate is required in the press, and an additional inking unit must be set up and cleaned after printing.

While the reproduction of linework and letters in the above cases may not be very demanding, printing of image objects that comprise smooth tonal transitions or many fine details is more complex. Often some regions of the image show certain artefacts after being printed. These artefacts can be, for example, tonal jumps in fading colour tones or undesired patterns that overlay certain image textures.

The reason for these artefacts is that often the screening concept selected for printing is not the perfect one for all details of the image to be printed. If, for example, an FM screen is selected for printing an image that comprises many fine details, the print of these fine details can look satisfying, but some smaller areas of the image that comprise constant or low tonal gradients may look a bit grainy.

Accordingly, there is a need for a screening method that addresses different challenges in a printing image depending on the details of the image to be printed.

### SUMMARY OF THE INVENTION

One aspect of the invention is to provide a method for an improved overall printing result on a printed substrate by using different screening techniques in a set of multi-colour printing plates.

Embodiments include identifying areas of different printing requirements in an image to be printed and allocating different screening techniques to these different areas, whereas the selected screening techniques for each area is the techniques that produces the best printing result.

The different screen techniques may be divided into low frequency screens and high frequency screens. The low frequency screens may be mainly based on AM screens and the high frequency screens may be mainly based on FM screens, such as Esko's Crystal S screen, for example.

However, because most modem screens in flexographic printing are combinations of various screening concepts, referring only to "AM" and "FM" screens may be imprecise. For example, most modern AM screens turn into FM screens in the highlight fadeout zone. While most of the tonal range contains AM screening in the highlights between 5 and 0 %, AM dots can be mixed and replaced by FM dots, as described in EP Application 3463919B1 titled METHOD FOR SMOOTHER TONAL RESPONSE IN FLEXOGRAPHIC PRINTING, owned by Applicant Esko Software BV, for example.

Thus, the AM and FM screens will be referred to in the present disclosure, respectively, as "low frequency" screens and "high frequency" screens.

Low frequency screens provide smoother printing results and less graininess in areas of the printing image that have low tonal gradients.

High frequency screenings show fewer artefacts in image areas that comprise a high number of small details, such as the structures on a leaf, for example.

Although the present disclosure provides examples primarily drawn to the use of two specific, different screening concepts that are allocated to different areas in the printing image, the invention is not limited only to the use of two different concepts, or only to the two concepts discussed herein in the examples. Other screening methods that are especially suited for fixing certain other shortcomings in flexographic printed images may be employed instead of, or in addition to, the methods described herein. Therefore, the present disclosure is not limited to only two different screening techniques, but may use three or four different screening techniques, for example.

The following presents a simplified summary of the invention in order to provide a basic understanding of some example aspects of the invention. This summary is not an extensive overview of the invention. Moreover, this summary is not intended to identify critical elements of the invention or to delineate the scope of the invention. The sole purpose of the summary is to present a simplified conceptual framework as a prelude to the more detailed description that is presented later.

In accordance with an aspect of the present invention, a process for making a set of printing plates for printing artwork belonging to a print j ob according to a printing process comprises providing a digital job file comprising artwork to be printed; identifying a plurality of screening areas of the artwork, each identified area having a different printing specification from another identified area; allocating a plurality of screening techniques to the plurality of screening areas, including at least allocating a first screening technique to a first identified screening area and a second screening technique to a second identified screening area; and creating the set of printing plates having a first set of printing dots embodying the first screening technique and a second set of printing dots embodying the second screening technique.

In an embodiment, the artwork comprises at least one image object in a bitmap format.

In an embodiment, the first screening technique comprises a low frequency screen applied in screening areas of the artwork corresponding to relatively low tonal gradients of the image.

In an embodiment, the low frequency screen comprises amplitude modulated ("AM") screening.

In an embodiment, the second screening technique comprises a high frequency screen applied in screening areas of the artwork corresponding to relatively high tonal gradients of the image to be printed.

In an embodiment, the high frequency screen comprises frequency modulated ("FM") screening.

In an embodiment, the high frequency screen comprises a micro screen configured to create surface structures in the second set of screening dots.

In an embodiment, the printing process is a multi-colour printing process.

In an embodiment, the set of printing plates comprises a third set of printing dots embodying a third screening technique and, optionally, a fourth set of printing dots embodying a fourth screening technique.

In an embodiment, identification of the plurality of screening areas and the allocation of the plurality of screening techniques is performed automatically by a computer program.

In an embodiment, the process for making a set of printing plates further comprises applying an individual colour profile to each screening area, optionally wherein the individual colour profile is applied using individual dot gain compensation curves.

In an embodiment, the artwork further comprises at least one vector-based object, and the method includes creating an image file comprising the at least one image object and a vector file comprising the at least one vector-based object.

In an embodiment, the process for making a set of printing plates further comprises separating the image file comprising the at least one image object into a first image subfile comprising relatively low tonal gradients of the image object and a second image subfile comprising relatively high tonal gradients of the image object, applying the first screening technique to the first image subfile, and applying the second screening technique to the second image subfile.

In an embodiment, separating the first image subfile from the second image subfile comprises application of a masking tool that scans for areas of low tonal gradient in the image file.

In an embodiment, the printing process is a multi-colour printing process having a predetermined number of colors, further comprising creating a set of colour distribution files for each of the first image subfile and the second image subfile of the first file, and for the vector file, each set comprising one colour distribution file corresponding to each of the predetermined number of colours, and processing each set of colour distribution files with a raster image processor (RIP).

In an embodiment, the process for making a set of printing plates further comprises combining together the RIP-processed colour distribution files for each of the predetermined number of colours to form a set of bitmap files, each bitmap file comprising information suitable for creating one of the printing plates in the set of printing plates, the set comprising a single color-specific printing plate corresponding to each color in the predetermined number of colors.

According to another aspect of the invention, a process for making a set of printing plates for printing artwork belonging to a print job according to a printing process comprises providing a digital job file comprising artwork to be printed; and creating two image subfiles of the artwork containing bitmap information used for making the set of printing plates, wherein the bitmap contains information corresponding to first and second areas applying different screens based upon high or low tonality of the first and second areas.

Still another aspect of the invention includes a computer readable media embodying non-transitory, computer-readable instructions programmed to cause a processor to perform the steps of: identifying a plurality of screening areas of a digital job file comprising artwork to be printed, each identified area having a different printing specification from another identified area; (b) allocating a plurality of screening techniques to the plurality of screening areas, including at least allocating a first screening technique to a first identified screening area and a second screening technique to a second identified screening area; and (c) creating the set of printing plates having a first set of printing dots embodying the first screening technique and a second set of printing dots embodying the second screening technique.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
Fig. 1 illustrates an example of a Double Circular Amplitude Modulated (AM) screen.
Fig. 2 illustrates an example of a Frequency Modulated (FM) screen.
Fig. 3 illustrates an example of a Monet screen for a flexo screen.
Fig. 4 illustrates an example of an image including areas of fine structured image information and areas of low tonal gradients, according to an exemplary embodiment of the invention.
Fig. 5 illustrates a mask resulting after application of a masking tool that scans for areas of low tonal gradient, according to an exemplary embodiment of the invention.
Fig. 6 illustrates a printing image including areas of high and low tonal gradient details, according to an exemplary embodiment of the invention.
Fig. 7a and 7b illustrate a comparison of the results of overprinted CMYK output of a detail of Fig 6, according to an exemplary embodiment of the invention and according to existing technologies, respectively.

### DETAILED DESCRIPTION OF THE INVENTION

Aspects of the invention will now be described by reference to exemplary embodiments and variations of those embodiments. Although aspects of the invention are illustrated and described herein with reference to specific embodiments, the illustrated examples are not intended to be limited to the details shown and described. Rather, various modifications may be made in the details within the scope and range of equivalents of the claims and without departing from the invention. For example, one or more aspects of the disclosed embodiments can be utilized in other embodiments and even other types of devices. Moreover, certain terminology is used herein for convenience only and is not to be taken as a limitation.

### Masking

Masking tools are used for identifying areas in an image suitable for low or high frequency screening. The terms "low" and "high" as referred to herein with respect to the frequency of screening dots or the tonal gradients of images should be understood to represent relative characteristics as compared to one another, not limited to any dividing point between the relatively low and relatively high areas. Therefore, the terms "relatively low" and "relatively high" as used herein are not necessarily drawn to any particular absolute values or ranges, but rather only mean that the respective values characterized as relatively low are lower than those characterized as relatively high. The selection of a "low frequency" screen and "high frequency" screen is typically dependent upon the capabilities and properties of the specific printing condition (e.g. the resolution of the inking system/anilox in use).

Masking tools are well known in reproduction artwork, and the identification and selection of a particular area in an image can either be made manually or, more preferably, with support of computer-based algorithms or fully automated computer algorithms.

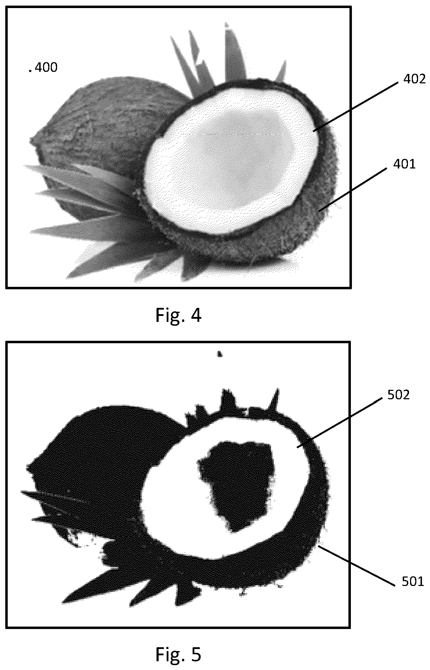

Fig. 4 shows an example of an image 400 comprising areas of fine structured image information 401 and areas of low tonal gradients 402. When a masking tool that scans for areas of low tonal gradient is applied, most of the inner coconut pulp is identified as having low tonal gradient (e.g., 402).

Fig. 5 illustrates the resulting mask. Areas 502 comprise details of low tonal gradient. All areas belonging to portion 501 are masked. These portions, such as the coconut shell, for example, comprising many fine details that will be RIPped (e.g., processed with a Raster Image Processor (RIP), such as Esko's RIP Imaging Engine, for example), using a high frequency screen, while all remaining areas belonging to areas 502 will be RIPped using a low frequency screen.

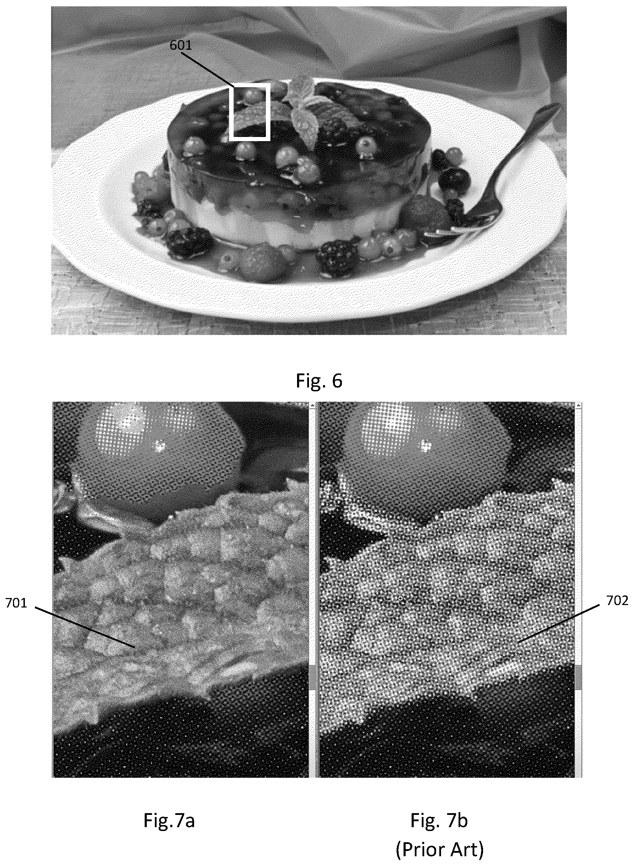

Fig. 6 shows a printing image including a detail 601 comprising areas of high and low tonal gradient details.

Fig. 7a and 7b compare the results of overprinted CMYK output of detail 601.

In Fig. 7a, the new technology according to the present disclosure is used. Here, the leaf 701 is printed with a high frequency screen and the other parts are printed with a low frequency screen.

In Fig. 7b, the complete image is printed with the low frequency screen. It can be seen clearly that leaf 702 does not reproduce the fine structures as precisely as leaf 701 in Fig. 7a does.

In an automated workflow, the following steps are performed on a full colour image file to be printed:
1. Identify all bitmap image objects in the full colour input image file.
2. Separate the identified bitmap image objects from the vector data objects of the full colour input image file.
3. Place the bitmap image objects into a separate bitmap image file and the vector data objects in a separate vector data image file.
4. Identify all portions of the bitmap image objects in the bitmap image file that contain highly detailed image information, such as, for example, fine textures of a leaf or wood.
5. Create a mask from the identified portions of highly detailed image information.
6. Use the mask to create two full colour image files from the bitmap image file, a first bitmap image subfile comprising all highly detailed image information and a second bitmap image subfile comprising all other bitmap image information, from the bitmap image file.
7. Allocate a high frequency screen to the first bitmap image subfile comprising the highly detailed image information.
8. Allocate a low frequency screen to the second bitmap image subfile comprising all other image information, e.g., with constant tonal values or smooth tonal value changes.
9. Create process colour distributions of the two resulting full colour image files comprising the first and second bitmap image subfiles.
10. Rasterize a set of colour distribution files comprising the highly detailed image information from the first bitmap image subfile using a high frequency screening technique.
11. Rasterize a set of colour distribution files comprising the non-highly detailed image information from the second bitmap image subfile using a low frequency screening technique.
12. Rasterize a set of colour distribution files from the vector data image file using one or more predetermined screening techniques selected for the vector data (which may also include first splitting the vector data image file into different subfiles each associated with a different screening technique.
12. Combine, for each colour to be used in creating the printed image (i.e. for each process and/or spot colour), the corresponding colour distribution image files created in the foregoing steps (e.g. comprising high frequency screen objects, low frequency screen objects, and vector objects) are combined into one appropriate rasterized (i.e. bitmap) colour image file corresponding to each colour.

As is known in the art, each colour image file is then used for creating a printing plate by any methods known in the art. Exemplary methods may include imaging a mask layer disposed on or over a photopolymer layer of the plate, exposing the plate with actinic radiation through the mask to cure the photopolymer, washing away uncured photopolymer, and drying and optionally further processing the exposed photopolymer to create a finished printing plate ready to receive ink. The plate at any step in the process prior to being "finished" may be referred to as a "plate precursor" (or, in shorthand, as a "plate," where it is clear from context to those of skill in the art whether the plate as references is finished or not). The screening dots in the image files map to surface relief dots in the finished photopolymer printing plate. During printing, printing dots receive ink and transfer that ink to a substrate to form the printed image. As is known in the art, each finished photopolymer printing plate also has a floor from which the relief dots project. Dots may have a variety of heights. Dots at a printing height receive and transfer ink, whereas dots intermediate the printing height and the floor generally do not receive and transfer ink, but may support the printing dots or may be used for identification purposes. The use of micro dots may provide for surface structures that facilitate better ink transfer properties, as described above. While well-suited for a flexographic printing process in which the imaging step comprises laser ablation of a masking (i.e. laser ablated mask system - LAMS) layer on a plate precursor using bitmap information corresponding to the combined screens for each colour, the methods as described herein are not limited for use in flexo processes or to LAMS imaging technology. Aspects of the invention are applicable to any technology for creating a printing plate (including additive manufacturing, use of film masks, and the like) having dots formed on the plate in different screening patterns corresponding to areas of different tonal quality in the artwork being printed.

While the workflow discussed above refers only to two different image properties and screening techniques, it should be understood the workflow can be extended to more than two image properties and screening techniques:

**Table 1**

| Print problem | Best screening concept |
|---|---|
| Image property 1 | Screening technique 1 |
| Image property 2 | Screening technique 2 |
| Image property 3 | Screening technique 3 |
| ..... | .... |

Combining two different screening techniques on one printing plate may create colour profile problems. A colour profile is a set of data that describes the way colours are represented in a particular device, ensuring consistent colour reproduction across different devices. In a flexographic printing process colours are represented as a combination of doses from a set of inks. Each ink is over-printed on an output media by means of a flexographic printing plate. A colour profile for a flexographic printing process maps process ink compositions (e.g., combinations of doses of a set of inks) to printed colours.

Ink tones and overprint behaviour can be influenced by the screening technique used, so different screening techniques might require different colour profiles. Accordingly, Table 1 must be extended by another column to reflect the colour profile:

**Table 2**

| Print problem | Best screening concept | Colour Profile |
|---|---|---|
| Image property 1 | Screening technique 1 | Colour Profile 1 |
| Image property 2 | Screening technique 2 | Colour Profile 2 |
| Image property 3 | Screening technique 3 | Colour Profile 3 |
| ..... | .... | .... |

In some cases the RIP that separates the input image file into the different ink separations is only using one profile to convert the colours. In these cases, and if two screening techniques are used, the second screening technique can compensate for colour differences by means of dedicated dot gain compensation curves. As is known in the art, a set of compensation curves is used for altering overprint behavior -- one for each ink -- and the compensation curves dedicated for a particular screen may be referred to as an individual set of dot gain compensation curves.

Traditional calibration methods use dot gain compensation to eliminate the effect of dot gain which makes, e.g., a 50 % dot area on the plate print darker than a 50 % tint of an ink. Accordingly, a compensation curve for all tints of an ink is created so that the tints print linear. Other calibration methods (e.g., G7 method) use dot gain compensation curves to modify overprint behaviour. A compensation curve for magenta and yellow shifts the printed tints for these inks in such a way that CMY composed gray tints print achromatic or neutral. With this method gray is in balance without the use of a profile.

Creating such additional compensation curves for the second screening technique corrects the difference in overprint behaviour without the need of a second profile.

The processes described above can be executed automatically using models or algorithms, such as but not limited to the Meta SAM (Segment Anything Model). The process of detecting different image properties at different locations of a bitmap image can be executed by Artificial intelligence (AI) search engine platforms, such as Amazon Rekognition^{™} from Amazon Web Services (AWS); Vision AI^{™} from Google^{®}; or Azure AI Vision^{™} from Microsoft^{®}, for example, that have been trained to look for certain image properties. The functionality of such off-the-shelf platforms is well known and understood by those of skill in the art, and demonstrated by the functionality demonstrated by, for example, the functionality of the Google Image search engine feature by which users can upload images and search using the content of the uploaded images. The invention is not limited to the use of any particular platform, algorithm, or model. Other embodiments may employ bespoke learning models, built using established vision recognition AI systems, such as the YOLO real-time object detection system. After the image has been completely segmented into groups of sections belonging to image properties 1, 2, 3 ..., for example, the appropriate screening concept can be automatically applied to each group.

Aspects of the invention may include creating a set of printing plates comprising a product of the processes as described herein and methods of printing comprising applying ink to each colour-specific printing plate in the set of printing plates and transferring the applied ink to a substrate to form a printed image. The applied inks may comprise any ink system, including but not limited to CMYK printing (with one color-specific plate for each of the colours cyan, magenta, yellow and black), printing systems with additional process colours (e.g. orange, green, and/or others without limitation), and systems with spot colours and/or underprint (e.g. white) and/or overprint (e.g. varnish) inks.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A process for making a set of printing plates for printing artwork belonging to a print job according to a printing process, the process comprising:
(a) providing a digital job file comprising artwork to be printed;
(b) identifying a plurality of screening areas of the artwork, each identified area having a different printing specification from another identified area;
(c) allocating a plurality of screening techniques to the plurality of screening areas, including at least allocating a first screening technique to a first identified screening area and a second screening technique to a second identified screening area; and
(d) creating the set of printing plates having a first set of printing dots embodying the first screening technique and a second set of printing dots embodying the second screening technique.

2. The process according to claim 1, wherein the artwork comprises at least one image object in a bitmap format.

3. The process of claim 2, wherein the first screening technique comprises a low frequency screen applied in screening areas of the artwork corresponding to relatively low tonal gradients of the image.

4. The process of claim 3, wherein the low frequency screen comprises amplitude modulated ("AM") screening.

5. The process according to claim 2, wherein the second screening technique comprises a high frequency screen applied in screening areas of the artwork corresponding to relatively high tonal gradients of the image to be printed.

6. The process according to claim 5, wherein the high frequency screen comprises frequency modulated ("FM") screening.

7. The process according to claim 5, wherein the high frequency screen comprises a micro screen configured to create surface structures in the second set of screening dots.

8. The process according to claim 1, wherein the printing process is a multi-colour printing process.

9. The process according to claim 1, wherein the set of printing plates comprises a third set of printing dots embodying a third screening technique and, optionally, a fourth set of printing dots embodying a fourth screening technique.

10. The process according to any of the foregoing claims, wherein identification of the plurality of screening areas and the allocation of the plurality of screening techniques is performed automatically by a computer program.

11. The process according to any of the foregoing claims, comprising applying an individual colour profile to each screening area, optionally wherein the individual colour profile is applied using an individual set of dot gain compensation curves.

12. The process according to claim 2, wherein the artwork further comprises at least one vector-based object, and the method includes creating an image file comprising the at least one image object and a vector file comprising the at least one vector-based object.

13. The process according to claim 12, further comprising separating the image file comprising the at least one image object into a first image subfile comprising relatively low tonal gradients of the image object and a second image subfile comprising relatively high tonal gradients of the image object, applying the first screening technique to the first image subfile, and applying the second screening technique to the second image subfile,
optionally, wherein separating the first image subfile from the second image subfile comprises application of a masking tool that scans for areas of low tonal gradient in the image file.

14. The process according to claim 13, wherein the printing process is a multi-colour printing process having a predetermined number of colors, further comprising creating a set of colour distribution files for each of the first image subfile and the second image subfile of the first file, and for the vector file, each set comprising one colour distribution file corresponding to each of the predetermined number of colours, and processing each set of colour distribution files with a raster image processor (RIP).

15. The process according to claim 14, comprising combining together the RIP-processed colour distribution files for each of the predetermined number of colours to form a set of bitmap files, each bitmap file comprising information suitable for creating one of the printing plates in the set of printing plates, the set comprising a single color-specific printing plate corresponding to each color in the predetermined number of colors.

16. A process for making a set of printing plates for printing artwork belonging to a print job according to a printing process, the process comprising:
(a) providing a digital job file comprising artwork to be printed; and
(b) creating two image subfiles of the artwork containing bitmap information used for making the set of printing plates, wherein the bitmap contains information corresponding to first and second areas applying different screens based upon high or low tonality of the first and second areas.

17. Computer readable media embodying non-transitory, computer-readable instructions programmed to cause a processor to perform the steps of:
(a) identifying a plurality of screening areas of a digital j ob file comprising artwork to be printed, each identified area having a different printing specification from another identified area;
(b) allocating a plurality of screening techniques to the plurality of screening areas, including at least allocating a first screening technique to a first identified screening area and a second screening technique to a second identified screening area; and
(c) creating the set of printing plates having a first set of printing dots embodying the first screening technique and a second set of printing dots embodying the second screening technique.
